# EUROPÄISCHE PATENTSCHRIFT

(11) **EP 3 859 483 B1**
(45) Veröffentlichungstag und Bekanntmachung des Hinweises auf die Patenterteilung: **21.12.2022**
(21) Anmeldenummer: 21152608.2
(22) Anmeldetag: 20.01.2021
(51) Int. Cl.: G05D 23/13

(54) **MISCHWASSERARMATUR MIT KOMPAKTEM THERMOSTATVENTIL**
MIXED WATER FITTING WITH COMPACT THERMOSTATIC VALVE
ARMATURE DE MITIGEUR POURVU DE SOUPAPE THERMOSTATIQUE COMPACTE

(30) Priorität: 31.01.2020 DE 102020102434
(43) Veröffentlichungstag der Anmeldung: 04.08.2021
(73) Patentinhaber: Grohe AG, 58653 Hemer (DE)
(72) Erfinder: KICK, Jonas, 58706 Menden (DE)

(56) Entgegenhaltungen:
- EP-A1- 2 664 830
- DE-T2- 69 215 661
- US-A- 5 356 074

## Beschreibung

Die Erfindung betrifft eine Mischwasserarmatur, wie etwa eine Waschtischarmatur. Zudem wird ein (kompaktes) thermostatisches Mischventil angegeben. Waschtischarmaturen können im Badezimmer oder in der Küche zum Einsatz kommen. Dabei sind sie in der Regel auf einem Tisch montiert und ragen mit Ihrem Auslauf über ein Waschbecken.

Marktübliche thermostatische Mischventile (Thermostatkartuschen) sind aufgrund ihrer Baugröße (insbesondere Baulänge) und ihrer An- und Abströmrichtung schwierig in ein optisch ansprechendes und kompaktes Waschtischarmaturen-Design zu integrieren.

Es sind thermostatische Einhebelmischerkartuschen bekannt, beispielsweise aus EP 2 664 830 A1, bei denen ein thermostatisches Mischventil und ein Absperrventil zu einer Kartusche bzw. Baugruppe kombiniert sind. Diese Kartuschen erfordern jedoch in der Regel komplexe Wasserführungselemente sowie filigrane Keramikscheiben und Dichtungen. Denn bei den bekannten Kartuschen durchströmen Warm- und Kaltwasser zunächst getrennt ein Absperrventil mit Keramikscheiben, bevor sie bei geöffnetem Absperrventil an das thermostatische Mischventil heranströmen können. Da Warm- und Kaltwasser im Absperrventil getrennt bleiben müssen, ergeben sich für die Keramikscheiben sehr komplexe Geometrien. Unter anderem aufgrund dieser Hindernisse finden sich kaum thermostatische Waschtischarmaturen auf dem Markt, obwohl die Thermostattechnologie auch am Waschtisch nennbare Vorteile für den Nutzer bieten kann.

Des Weiteren sind thermostatische Zweigriffarmaturen bekannt, beispielsweise aus DE 692 15 661 T2 und US 5,356,074 A, bei denen wie bei der thermostatischen Duscharmatur ein Griff für die Wahl der Temperatur und ein Griff für die Betätigung des Absperrventils verwendet werden kann. Aufgrund der Baugröße der Komponenten lässt sich bei diesem Konzept schwierig ein ansprechendes Design der Armatur erreichen.

Hiervon ausgehend ist es eine Aufgabe der Erfindung, die im Zusammenhang mit dem Stand der Technik geschilderten Probleme zumindest teilweise zu lösen. Insbesondere sollen eine Mischwasserarmatur und ein thermostatisches Mischventil angegeben werden, die ein optisch ansprechendes und/oder möglichst kompaktes Design, insbesondere für eine Waschtischarmatur ermöglichen. Darüber hinaus soll eine für den Benutzer vorteilhafte Bedienbarkeit erreicht werden. Weiterhin soll eine möglichst einfache Herstellbarkeit, insbesondere im industriellen Maßstab und/oder ggf. auch einer Produktpalette ermöglicht werden können.

Diese Aufgaben werden gelöst durch die Merkmale der unabhängigen Patentansprüche. Weitere vorteilhafte Ausgestaltungen der hier vorgeschlagenen Lösung sind in den abhängigen Patentansprüchen angegeben. Es ist darauf hinzuweisen, dass die in den abhängigen Patentansprüchen einzeln aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Mischwasserarmatur bei, die ein Armaturengehäuse, ein thermostatisches Mischventil zur Regulierung der Mischwassertemperatur, ein Einstellventil zur Einstellung eines Durchflusses durch die Mischwasserarmatur, und mindestens ein manuelles Betätigungselement zur wahlweisen, mechanischen Betätigung des Mischventils und des Einstellventils aufweist, wobei das Mischventil und das Einstellventil derart in dem (selben) Armaturengehäuse hintereinander angeordnet und fluidisch miteinander verbunden sind, dass durch die Mischwasserarmatur strömendes Wasser das Mischventil vor dem Einstellventil durchströmt und wobei das Mischventil und das Einstellventil räumlich voneinander getrennt und relativ zueinander bewegbar sind.

Bei der Mischwasserarmatur kann es sich beispielsweise um eine Waschtischarmatur handeln. Die Waschtischarmatur kann so montierbar sein, dass das Mischventil und das Einstellventil zumindest teilweise oder vollständig in und/oder oberhalb (insbesondere nicht unterhalb) einer Tischplatte des Waschtischs angeordnet sind. Die Mischwasserarmatur kann mindestens ein Befestigungsmittel, zum Beispiel in Form eines Kranzes um das Armaturengehäuse, aufweisen, die in axialer Richtung auf Höhe oder unterhalb des Mischventils liegen, sodass beide Ventile oberhalb eines Waschtischs montiert werden können. Das Armaturengehäuse ist in der Regel einstückig gebildet. Das Armaturengehäuse kann mit Kunststoff oder einem metallischen Werkstoff gebildet sein. In dem Armaturengehäuse kann mindestens ein Kunststoffinnenteil angeordnet sein, in dem das Mischventil und/oder das Einstellventil gebildet und/oder angeordnet sein können. Vorzugsweise sind für das Mischventil und das Einstellventil separate Kunststoffinnenteile vorgesehen. Das mindestens eine Kunststoffinnenteil kann dazu eingerichtet sein, mindestens einen Wasserweg in der Mischwasserarmatur zu bilden.

Das thermostatische Mischventil kann in der Form einer (Thermostat-)Kartusche bzw. als (vormontierbare) Baugruppe bereitgestellt sein. Das thermostatische Mischventil kann zur Regulierung der Mischwassertemperatur ein Regelelement aufweisen, welches ein in Abhängigkeit der damit in Kontakt stehenden Mischwassertemperatur sein Volumen und dadurch eine Position eines Regelschiebers verändern kann, der ein Verhältnis von Warmwasser zu Kaltwasser einstellen kann. Der Sollwert der Mischwassertemperatur kann dabei über ein Stellelement, wie etwa eine Reguliermutter, des Mischventils vorgegeben werden. Das Stellelement kann (hierzu) insbesondere über einen Gewindetrieb die axiale Position des Regelelementes verändern. Das Einstellventil kann (ebenfalls) in der Form einer Kartusche bzw. als (vormontierbare) Baugruppe bereitgestellt sein. Das Einstellventil kann zur Einstellung und/oder Regulierung des Durchflusses bzw. Volumenstroms durch die Mischwasserarmatur beispielhaft mindestens eine Ventilscheibe, wie etwa eine oder mehrere Keramikscheiben aufweisen.

Bei dem manuellen Betätigungselement (bzw. händischen Bedienelement) kann es sich zum Beispiel um einen Hebel, Drehgriff, Drehknauf oder dergleichen handeln. Es können auch mehrere, vorzugsweise zwei Betätigungselemente vorgesehen sein, wobei beispielsweise ein Betätigungselement für die Durchflusseinstellung und ein weiteres Betätigungselement für die Temperaturvorgabe (auf bestimmte Temperaturwerte) vorgesehen sein kann. Wenn mehrere Betätigungselemente vorgesehen sind, dann sind diese vorzugsweise an derselben Position oder in demselben Bereich (zum Beispiel derselben (Stirn-)Seite) der Mischwasserarmatur angeordnet. Das mindestens eine manuelle Betätigungselement kann unmittelbar mechanisch auf mindestens ein Stellelement des Mischventils und/oder des Einstellventils wirken (insbesondere ohne zwischengeschaltete Elektronik).

Das (gesamte) Mischventil und das (gesamte) Einstellventil sind räumlich voneinander getrennt und relativ zueinander bewegbar, insbesondere (um eine gemeinsame Mittelachse) verdrehbar. Das Mischventil und das Einstellventil können beispielsweise mittels eines Adapters voneinander räumlich getrennt sein. Der Adapter kann hierzu eine (Boden-)Wand aufweisen, die sich zumindest teilweise zwischen dem Mischventil und dem Einstellventil erstreckt. Die Wand kann einen von dem Adapter gebildeten Raum (zumindest nach unten) begrenzen, in dem das Einstellventil (verdrehsicher) aufgenommen sein kann. In dem Boden des Adapters kann ein Zuströmkanal hin zum Einstellventil und/oder ein Abströmkanal weg vom Einstellventil (und hin zum Auslauf der Armatur) gebildet sein. Dabei kann der Zuströmkanal im Wesentlichen axial und der Abströmkanal im Wesentlichen axial und (nach einem Knick) radial verlaufen. Die Begriffe "axial" und "radial" beziehen sich insbesondere auf eine (gemeinsame) Mittelachse des Mischventils und/oder des Einstellventils. Insbesondere kann der Adapter einen radial nach Außen weisenden Auslass hin zum Auslauf der Wasserarmatur aufweisen. Der Adapter kann Einstellventil-spezifisch gebildet sein. Somit können verschiedene Einstellventile in vorteilhafter Weise mit einem Mischventil kombinierbar sein.

Besonders vorteilhaft an der Mischwasserarmatur und/oder dem Mischventil ist, dass das Mischventil räumlich besonders kompakt gebildet sein kann, sodass es gemeinsam mit dem Einstellventil in ein Armaturengehäuse integriert werden kann, welches zumindest teilweise oder vollständig oberhalb eines Waschtisches montiert werden kann. Insbesondere ist in diesem Zusammenhang bei dem Mischventil vorgesehen, dass eine Abströmung durch das Temperaturwahlelement hindurch erfolgen kann. Hierzu können beispielsweise ein durchströmbarer Gewindetrieb und/oder ein durchströmbares Stellelement des Mischventils (die gemeinsam das Temperaturwahlelement bilden können) beitragen. Zur Kompaktheit des Mischventils kann weiterhin eine platzsparende Anordnung des Überlastungsschutzes (insbesondere um eine Arbeitskolbenführung des Regelelementes herum) beitragen. Insbesondere kann Wasser durch den Gewindetrieb und/oder das Stellelement (bzw. durch das Temperaturwahlelement) hindurch in einen Adapter strömen, in dem das Einstellventil (ggf. auch als "Absperrventil" bezeichnet") verbaut ist.

Nach einer vorteilhaften Ausgestaltung wird vorgeschlagen, dass das Mischventil und das Einstellventil jeweils eine Mittelachse aufweisen, die koaxial zueinander ausgerichtet sind. Dies kann mit anderen Worten auch so beschrieben werden, dass eine Mischventil-Mittelachse und eine Einstellventil-Mittelachse koaxial zueinander ausgerichtet sind.

Nach einer weiteren vorteilhaften Ausgestaltung wird vorgeschlagen, dass das Einstellventil zumindest teilweise in einem Adapter angeordnet ist, der eine Bewegung des Betätigungselements auf ein Stellelement des Mischventils übertragen kann. Insbesondere ist der Adapter relativ zum Armaturengehäuse drehbar gelagert und/oder kann (mechanisch) ein Drehmoment auf das Stellelement (bzw. Temperaturwahlelement) des Mischventils übertragen (z. B. durch eine Verzahnung). Zur Temperaturverstellung kann über das Betätigungselement eine Drehung des Adapters eingeleitet werden. Der Adapter kann die Drehung auf das Stellelement des Mischventils übertragen. Zum Öffnen und/oder Schließen des Einstellventils ist eine Drehung des Adapters in der Regel nicht erforderlich. Vielmehr kann das Einstellventil drehfest in oder an dem Adapter gehalten sein. Weiterhin kann eine (mechanische) Arretierung vorgesehen sein, um eine Drehung des Einstellventils oder eines Teils davon relativ zum Adapter zu verhindern. Dies ist insbesondere dann vorteilhaft, wenn ein Standard-Einstellventil verwendet werden soll, welches selbst eine Mischfunktion zur Temperatureinstellung aufweist.

Nach einer weiteren vorteilhaften Ausgestaltung wird vorgeschlagen, dass ein gemeinsames, manuelles Betätigungselement zur wahlweisen, mechanischen Betätigung des Mischventils und des Einstellventils vorgesehen ist. Bei dem gemeinsamen (einzelnen), manuellen Betätigungselement kann es sich beispielsweise um einen Hebel handeln. Entsprechende Armaturen werden auch als sogenannte Einhebelmischer oder Einhebelmischerarmaturen bezeichnet.

Laut der Erfindung wird vorgeschlagen, dass das Mischventil abströmseitig einen Gewindetrieb zur Temperaturvorgabe aufweist. Insbesondere weist das Mischventil einen durchströmbaren Gewindetrieb zur Temperaturvorgabe auf. Der Gewindetrieb ist insbesondere zwischen einem Stellelement (zum Beispiel Reguliermutter) und einem Regelelement (zum Beispiel Dehnstoffelement) des Mischventils vorgesehen. Der Gewindetrieb kann eine Drehbewegung des Stellelements in eine axiale Bewegung des Regelelements übertragen. Der Gewindetrieb kann ein drehbares, in axialer Richtung festgelegtes Stellelement (Reguliermutter) und/oder ein relativ zum Stellelement axial ausrückbares Schraubelement aufweisen. Das Stellelement kann (drehfest) mit dem Betätigungselement, zum Beispiel über einen Adapter für das Einstellelement verbunden sein.

Nach einer weiteren vorteilhaften Ausgestaltung wird vorgeschlagen, dass das Mischventil einen (durchströmbaren) Gewindetrieb aufweist, der unmittelbar auf ein Regelelement des Mischventils wirkt. Insbesondere kann ein Schraubelement des Gewindetriebs (stets) in Kontakt mit dem Regelelement stehen. Insbesondere weist das Schraubelement einen (radial) nach innen gerichteten Vorsprung auf, der über eine axiale Anlagefläche an dem Schraubelement zur Anlage kommen kann.

Nach einer weiteren vorteilhaften Ausgestaltung wird vorgeschlagen, dass das Mischventil einen (durchströmbaren) Gewindetrieb aufweist, der zumindest teilweise eine Mischkammer umgibt. Die Mischkammer dient der Mischung von Kalt- und Warmwasser. Das Regelelement kann zumindest teilweise in der Mischkammer angeordnet sein. Die Mischkammer kann einen Auslass des Mischventils bilden.

Nach einer weiteren vorteilhaften Ausgestaltung wird vorgeschlagen, dass das Mischventil ein komprimierbares Überlastungsschutzelement für ein Regelelement des Mischventils aufweist. Dabei kann das Überlastungsschutzelement zwischen einem Regelschieber des Mischventils und dem Regelelement (insbesondere über eine Hülse) wirken. Beispielsweise kann das Überlastungsschutzelement mit einer Feder, insbesondere Schraubenfeder und/oder Druckfeder gebildet sein. Das Überlastungsschutzelement kann eine zu große Ausdehnung des Regelelementes (durch Nachgeben) kompensieren. Insbesondere ist das Überlastungsschutzelement so eingerichtet, dass es erst öffnet, wenn eine Ausdehnung des Regelelements über einen (vor-)bestimmten Grenzwert erfolgt. Hierzu kann beispielsweise eine Federsteifigkeit des Überlastungsschutzelements größer sein als eine Federsteifigkeit einer Vorspannfeder zum Vorspannen des Regelschiebers. Insbesondere ist das Überlastungsschutzelement zumindest teilweise (in radialer Richtung) innenliegend zu der Vorspannfeder angeordnet.

Nach einer weiteren vorteilhaften Ausgestaltung wird vorgeschlagen, dass das Mischventil ein komprimierbares Überlastungsschutzelement für ein Regelelement des Mischventils aufweist, wobei das Überlastungsschutzelement zumindest teilweise in einem Regelschieber des Mischventils angeordnet ist. Beispielsweise kann das Überlastungsschutzelement zumindest teilweise zwischen einer Hülse und einer Innenwand des Regeschiebers angeordnet sein. Die Hülse kann in dem Regelschieber geführt sein, insbesondere so, dass sie zumindest in einer Richtung relativ zu dem Regelschieber axial bewegbar ist. Die Hülse kann zur Führung des Regelelements dienen.

Nach einem weiteren Aspekt wird auch ein thermostatisches Mischventil für eine Mischwasserarmatur nach einem der vorhergehenden Ansprüche vorgeschlagen. Das thermostatische Mischventil kann den vorstehend beschriebenen Gewindetrieb und/oder das vorstehend beschriebene Überlastungsschutzelement aufweisen. Das thermostatische Mischventil kann vorteilhaft kompakt ausgebildet sein, wozu insbesondere der beschriebene Gewindetrieb und/oder das beschriebene Überlastungsschutzelement beitragen. Grundsätzlich kann das thermostatische Mischventil auch in anderen Armaturen zum Einsatz kommen, die insbesondere ähnliche Anforderungen an die Kompaktheit des Mischventils stellen. Das thermostatische Mischventil lässt sich (jedoch) in besonders vorteilhafter Weise in eine Waschtischarmatur integrieren. Weiterhin kann das Mischventil vorteilhaft mit verschiedenen Absperrventilen kombiniert werden, um unterschiedliche Bedienkonzepte umsetzen zu können.

Die im Zusammenhang mit der Mischwasserarmatur erörterten Details, Merkmale und vorteilhaften Ausgestaltungen können entsprechend auch bei dem hier vorgestellten thermostatischen Mischventil auftreten und umgekehrt. Insoweit wird auf die dortigen Ausführungen zur näheren Charakterisierung der Merkmale vollumfänglich Bezug genommen.

Die hier vorgestellte Lösung sowie deren technisches Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in oder in Zusammenhang mit den Figuren erläuterten Sachverhalte zu extrahieren und mit anderen Bestandteilen und/oder Erkenntnissen aus anderen Figuren und/oder der vorliegenden Beschreibung zu kombinieren. Es zeigen beispielhaft und schematisch:
- Fig. 1:: eine hier vorgeschlagene Mischwasserarmatur in rückseitiger Schnittansicht,
- Fig. 2:: die Mischwasserarmatur auf Fig. 1 in seitlicher Schnittansicht,
- Fig. 3:: eine weitere hier vorgeschlagene Mischwasserarmatur in seitlicher Schnittansicht,
- Fig. 4:: ein hier vorgeschlagenes, thermostatisches Mischventil, und
- Fig. 5 bis 7:: verschiede Konzepte zur Betätigung einer hier vorgeschlagene Mischwasserarmatur.

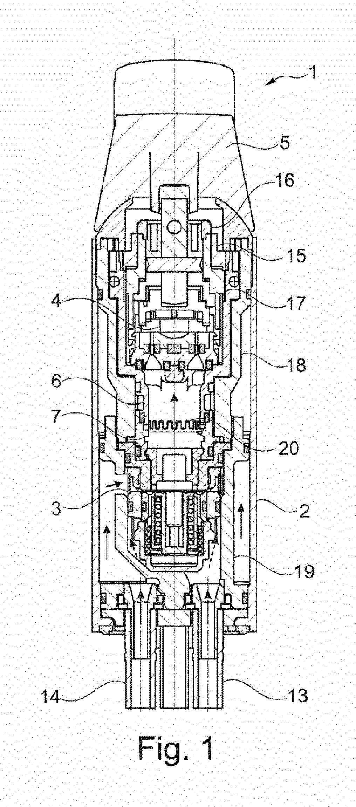

Fig. 1 zeigt beispielhaft und schematisch eine hier vorgeschlagene Mischwasserarmatur 1 in rückseitiger Schnittansicht. Die Mischwasserarmatur 1 weist ein (einteiliges) Armaturengehäuse 2, ein thermostatisches Mischventil 3 (in Form eines Thermostatkartusche) zur Regulierung der Mischwassertemperatur, ein Einstellventil 4 (in Form einer Durchflusskartusche) zur Einstellung eines Durchflusses durch die Mischwasserarmatur 1 und ein manuelles Betätigungselement 5 zur wahlweisen, mechanischen Betätigung des Mischventils 3 und des Einstellventils 4 auf. Das Mischventil 3 und das Einstellventil 4 sind derart in dem Armaturengehäuse 2 hintereinander angeordnet und fluidisch miteinander verbunden, dass durch die Mischwasserarmatur 1 strömendes Wasser das Mischventil 3 vor dem Einstellventil 4 durchströmt. Zudem sind das (gesamte) Mischventil 3 und das (gesamte) Einstellventil 4 räumlich voneinander getrennt und relativ zueinander bewegbar, insbesondere verdrehbar.

In Fig. 1 ist weiterhin beispielhaft gezeigt, dass das Mischventil 3 und das Einstellventil 4 jeweils eine Mittelachse aufweist, die koaxial zueinander ausgerichtet sind. Zudem ist gezeigt, dass das Einstellventil 4 beispielsweise zumindest teilweise in einem Adapter 6 angeordnet sein kann, der eine (Dreh-)Bewegung des Betätigungselements 5 auf ein Stellelement 7 des Mischventils 3 übertragen kann. Ferner handelt es sich bei dem Ausführungsbeispiel nach Fig. 1 um eine sogenannte Einhebelmischerarmatur, sodass auch gezeigt ist, dass und ggf. wie ein gemeinsames, manuelles Betätigungselement 5 zur wahlweisen, mechanischen Betätigung des Mischventils 3 und des Einstellventils 4 vorgesehen sein kann.

Fig. 1 zeigt somit ein erstes Ausführungsbeispiel der hier vorgeschlagenen Mischwasserarmatur 1. In diesem Ausführungsbeispiel ist die Mischwasserarmatur 1 beispielhaft in der Form einer Waschtischarmatur gebildet, in der das thermostatische Mischventil 3 mit einem beispielhaft in Form einer (üblichen) Einhebelmischerkartusche gebildeten Einstellventils 4 kombiniert ist. In das Armaturengehäuse 2 ist weiterhin beispielsweise ein unterer Einsatz 19 eingesetzt, um die Anschlussschläuche 13, 14 aufzunehmen und die Wasserwege für Warm- und Kaltwasser abzubilden und beispielhaft auch das thermostatische Mischventil 3 aufzunehmen. Warmwasser kann durch den Warmwasseranschlussschlauch 13 in die Mischwasserarmatur 1 einströmen und geführt durch den unteren Einsatz 19 an das thermostatische Mischventil 3 heran strömen. Kaltwasser kann durch den Kaltwasseranschlussschlauch 14 in die Mischwasserarmatur 1 einströmen und geführt durch den unteren Einsatz 19 und das Armaturengehäuse 2 an das thermostatische Mischventil 3 heran strömen.

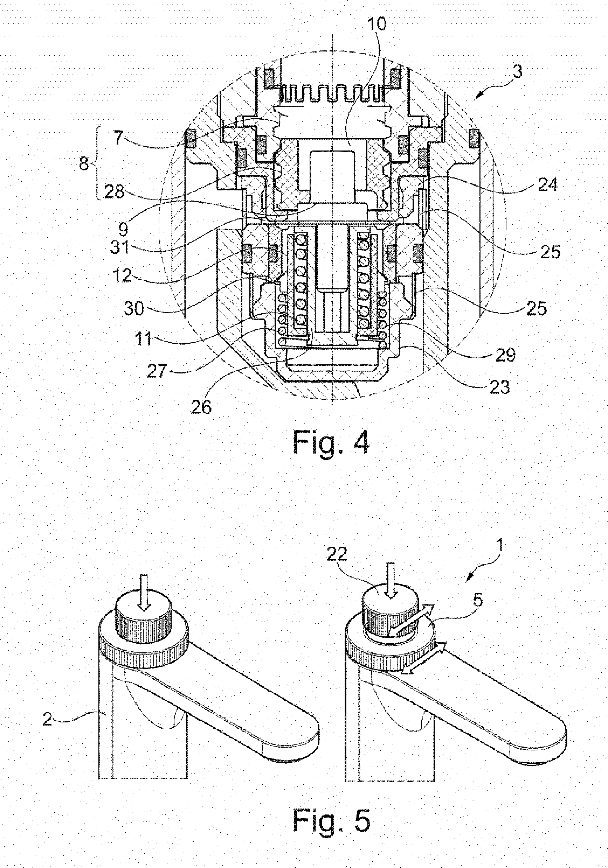

Vom Abgang des Mischventils 3 kann Mischwasser in den Adapter 6 und durch diesen in das Einstellventil 4 (Einhebelmischerkartusche) strömen. Der Adapter 6 ist in einem oberen Einsatz 18 drehbar gelagert und axial beispielhaft durch Stifte 17 gesichert. In dem Adapter 6 ist die Einhebelmischerkartusche verdrehsicher montiert und mit einem Schraubring 15 befestigt. Die Rotation innerhalb der Einhebelmischerkartusche, welche normalerweise zur Temperaturverstellung verwendet werden könnte, ist durch eine Arretierhülse 16 gesperrt. Beim Schwenken des in Form eines Hebels gebildeten Betätigungselements 5 werden somit die Einhebelmischerkartusche und der Adapter 6 als Einheit gedreht. Über eine Geometrie 20 zur Drehmomentübertragung wird die Drehbewegung auf ein beispielhaft in Form einer Reguliermutter gebildetes Stellelement (vgl. Fig. 4) des thermostatischen Mischventils 3 weitergeleitet und auf diese Weise eine Sollwertverstellung der Temperatur vorgenommen.

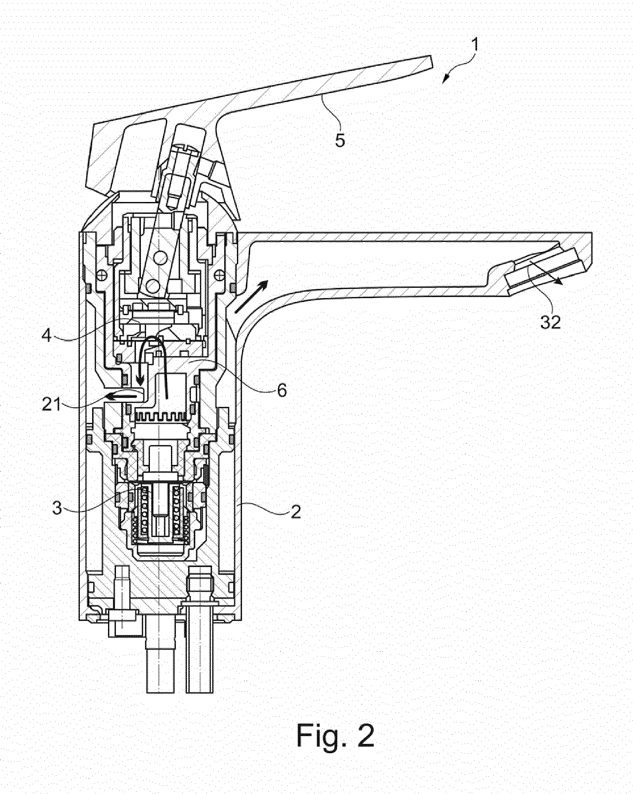

Fig. 2 zeigt beispielhaft und schematisch die Mischwasserarmatur aus Fig. 1 in seitlicher Schnittansicht. Fig. 2 zeigt somit das gleiche Ausführungsbeispiel wie Fig. 1, jedoch in einer anderen Richtung geschnitten. In dieser Ansicht ist zu erkennen, dass durch ein Kippen des in Form eines Hebels gebildeten Betätigungselements 5 die Einhebelmischerkartusche geöffnet werden kann. Das Mischwasser kann dann von der Einhebelmischerkartusche (Einstellventil 4) durch einen im Adapter 6 angeordneten Auslass 21 in den zum Auslauf 32 hin geöffneten Bereich des Armaturengehäuses 2 strömen.

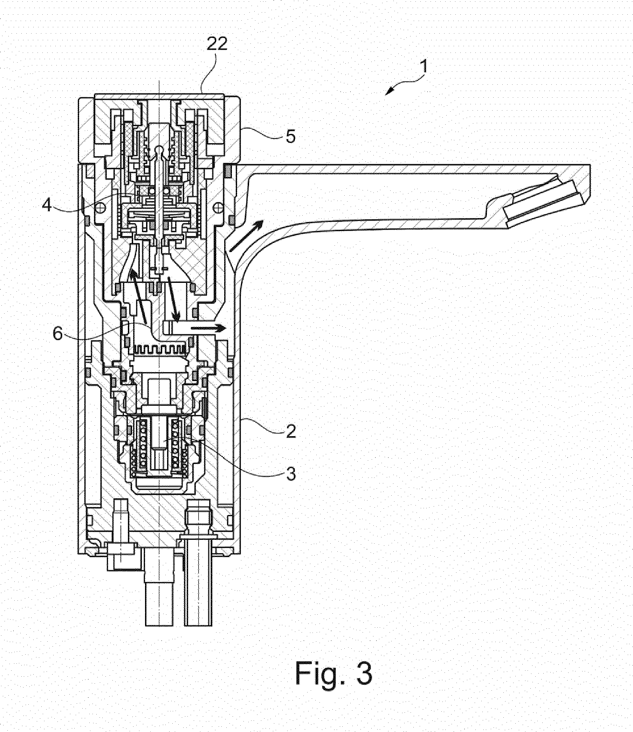

Fig. 3 zeigt beispielhaft und schematisch eine weitere hier vorgeschlagene Mischwasserarmatur 1 in seitlicher Schnittansicht. Fig. 3 zeigt in diesem Zusammenhang ein zweites Ausführungsbeispiel. In diesem Ausführungsbeispiel ist in einer Waschtischarmatur das thermostatische Mischventil 3 mit einem in Form einer Drucktastenkartusche gebildeten Einstellventils 4 kombiniert. Das Ausführungsbeispiel ist im unteren Bereich weitestgehend gleich zum ersten Ausführungsbeispiel. An die Stelle des Adapters 6 für die Einhebelmischerkartusche tritt im zweiten Ausführungsbeispiel ein Adapter 6 für die Drucktastenkartuschen. In diesen wird die Drucktastenkartusche eingesetzt und mit einem Schraubring fixiert. Die Temperaturverstellung wird an der Armatur über ein in Form eines Drehgriffs gebildeten Betätigungselements 5 vorgenommen, das in diesem Ausführungsbeispiel direkt in den Drucktastenkartuschen-Adapter integriert ist. Das Starten und Stoppen des Wasserflusses kann durch Betätigung einer Drucktaste 22 vorgenommen werden.

Fig. 4 zeigt beispielhaft und schematisch ein hier vorgeschlagenes, thermostatisches Mischventil 3. Das Mischventil 3 ist für den Einsatz in einer der oben beschriebenen Mischwasserarmaturen geeignet, insbesondere vorgesehen und eingerichtet. Hierzu weist das Mischventil 3 beispielhaft abströmseitig einen (durchströmbaren) Gewindetrieb 8 zur Temperaturvorgabe auf. Dieser Gewindetrieb 8 kann weiterhin beispielhaft unmittelbar auf ein Regelelement 9 des Mischventils 3 wirken, insbesondere um dessen axiale Position zu verändern. Beispielsweise umgibt der Gewindetrieb 8 zudem eine Mischkammer 10, in der Warmwasser und Kaltwasser zu Mischwasser gemischt werden können.

Darüber hinaus weist das Mischventil 3 hier beispielsweise ein komprimierbares Überlastungsschutzelement 11 für ein Regelelement 9 des Mischventils 3 auf. Das Überlastungsschutzelement 11 kann zwischen einem Regelschieber 12 des Mischventils 3 und dem Regelelement 9 wirken. Zudem ist gezeigt, dass das Überlastungsschutzelement 11 zumindest teilweise in einem Regelschieber 12 des Mischventils 3 angeordnet sein kann. Das Überlastungsschutzelement 11 dient insbesondere dazu, eine Beschädigung des Regelelements 9 zu verhindern. Das Überlastungsschutzelement 11 ist hier beispielhaft mit einer Feder gebildet.

Der Regelschieber 12 kann einen (axialen und in Umfangsrichtung umlaufenden) Warmwasserspalt 30, durch den Warmwasser in die Mischkammer 10 strömen kann, und einen (axialen und in Umfangsrichtung umlaufenden) Kaltwasserspalt 31, durch den Kaltwasser in die Mischkammer 10 strömen kann, wechselweise öffnen und schließen. Hierzu kann der Regelschieber 12 von dem zumindest teilweise in der Mischkammer 10 angeordneten Regelelement 9 in axialer Richtung verschoben bzw. hin und her bewegt werden. Das Regelelement 9 weist hierzu in der Regel ein temperaturabhängiges Volumen auf. Beispielsweise kann das Regelelement 9 mit einem Dehnstoffelement gebildet sein. Dieses kann sich ausdehnen, wenn das Mischwasser zu warm ist, und sich entsprechend komprimieren, wenn das Mischwasser zu kalt ist. Diese Dehnung resultiert insbesondere in einer Längenänderung des Regelelements 9 und infolgedessen in einer Veränderung der axialen Position des Regelschiebers 12. Zur Temperaturvorgabe kann die axiale Position des Regelelements 9 hier beispielhaft mittels des Gewindetriebes 8 eingestellt werden. Der Gewindetrieb 8 ist mit einem hier beispielhaft in der Form einer Reguliermutter gebildeten Stellelements 7 und einem damit zusammenwirkenden Schraubelement 28 gebildet. Dabei resultiert eine Drehbewegung des Stellelements 7 in einer axialen Bewegung des Schraubelements 28, welches auch als Gewindestück bezeichnet werden kann und (unmittelbar) auf das Regelelement 9 wirken kann.

Fig. 4 zeigt in diesem Zusammenhang insbesondere eine Detailansicht des thermostatischen Mischventils 3 aus den Figuren 1 bis 3. Die Bauteile des Mischventils 3 sind beispielhaft in einem Kartuschengehäuse 23 untergebracht, welches zugleich den Warmwasserdichtsitz enthält. Der Kaltwasserdichtsitz 24 wird durch ein separates Teil gebildet, welches in das Kartuschengehäuse 23 eingeschraubt wird. Schmutzfangsiebe 25 können am Umfang der Kartusche an den Einströmöffnungen angeordnet sein, um das Ventil vor Schmutzpartikeln zu schützen. Mit dem Regelschieber 12 können die Querschnittsflächen des Warmwassereintritts und des Kaltwassereintritts gegensinnig verändert werden, um das Mischungsverhältnis zu beeinflussen. Das einströmende Warm- und Kaltwasser trifft am Regelelement 9 (Dehnstoffelement) aufeinander und strömt durch einen Kanal zwischen Regelelement 9 und Schraubelement 28 zum Auslass des Mischventils 3. Der Regelschieber 12 ist beispielhaft durch ein Überlastungsschutzelement 11 auf einer Hülse 26 gegen einen Sicherungsring 29 geklemmt. Im normalen Betrieb bewegen sich der Regelschieber 12 und die Hülse 26 als Einheit und werden von der Rückstellfeder 27 gegen den Arbeitskolben des Regelelements 9 vorgespannt. Nur wenn der Regelschieber 12 am Kaltwasser-Dichtsitz 23 anliegt und das Regelelement 9 eine weitere Ausdehnung erfährt, wird das als Feder gebildete Überlastungsschutzelement 11 gestaucht und verhindert eine Überlastung des Regelelements 9. Das Regelelement 9 liegt andererseits am Schraubelement 28 an. Die Position des Schraubelements 28 in axialer Richtung definiert den Temperatursollwert. Das Stellelement 7 (Reguliermutter), das Schraubelement 28 (Gewindestück) und der Kaltwasserdichtsitz 24 bilden gemeinsam einen Gewindetrieb 8, durch den das Schraubelement 28 gemeinsam mit dem Regelelement 9 zur Sollwertänderung axial bewegt werden kann. Dazu ist das Schraubelement 28 im Kaltwasserdichtsitz 24 verdrehsicher und axial beweglich gelagert. Die Bewegung wird über das Stellelement 7 (Reguliermutter) eingeleitet.

Die Figuren 5 bis 7 zeigen beispielhaft und schematisch verschiede Konzepte zur Betätigung einer hier vorgeschlagenen Mischwasserarmatur. In diesem Zusammenhang zeigen die Figuren 5 bis 7 beispielsweise weitere Bedienkonzepte, welche mit dem hier beschriebenen thermostatischen Mischventil in Kombination mit einer Drucktastenkartusche realisiert werden können.

In Fig. 5 sind zwei getrennte Betätigungselemente 5, 22 vorgesehen, die jedoch beispielhaft an derselben Stelle (bezogen auf die Armatur 1) angeordnet sind. Dabei kann durch Drücken der Drucktaste 22 das Einstellventil 4 geöffnet oder geschlossen werden. Weiterhin kann in der geöffneten Position die Drucktaste 22 für eine Volumenverstellung drehbar sein. Das Betätigungselement 5 ist beispielhaft in der Form eines Drehkranzes ausgebildet und kann zur Temperatureinstellung gedreht werden. Es kann (wie gezeigt) auch vorgesehen sein, dass in der geöffneten Position nicht nur das Einstellventil 4 geöffnet ist, sondern auch die Drucktaste 22 axial ausgefahren bzw. (nach oben) ausgerückt ist.

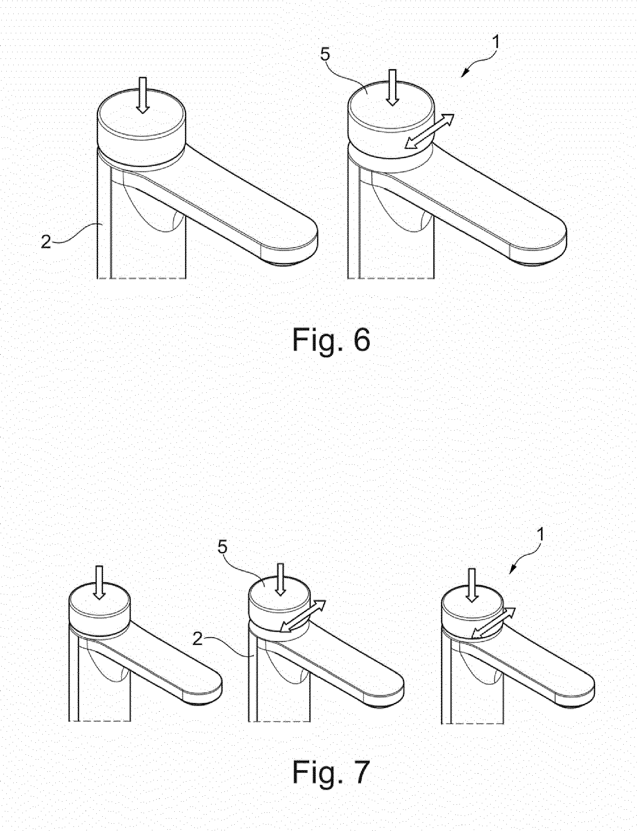

In den Figuren 6 und 7 ist jeweils ein gemeinsames Betätigungselement 5 zur Einstellung des Volumenstroms und der Temperatur vorgesehen. Dieses Betätigungselement 5 ist beispielhaft in der Form eines kombinierten Druck- und Drehknopfes ausgebildet. Bei der Ausführungsform gemäß Fig. 6 kann immer nur ein bestimmter Volumenstrom abgegeben werden. Dieser kann durch ein Drücken des Betätigungselements 5 freigegeben werden. Gegebenenfalls kann ein weiteres Drücken während der Abgabe zu einem Schließen des Einstellventils 4 führen. Die Temperatureinstellung kann über ein Drehen des Betätigungselements 5 (in der geöffneten Position) erfolgen.

Bei der Ausführungsform gemäß Fig. 7 kann zusätzlich eine Einstellbarkeit des Volumenstroms ermöglicht werden. Dieser kann durch ein Drehen des Betätigungselements 5 in der geöffneten Position erfolgen. Die Temperatureinstellung kann in diesem Fall über ein Drehen des Betätigungselements 5 in einer anderen Position des Betätigungselements 5, beispielsweise in einer gedrückten Position, wie etwa während eines gedrückt Haltens des Betätigungselements 5 erfolgen.

Das beschriebene thermostatische Mischventil 3 ermöglicht insbesondere eine vorteilhaft kompakte Bauweise, insbesondere durch die beschriebene Anordnung des Überlastungsschutzelements 11 und des Gewindetriebs 8. Aufgrund der Kompaktheit ist das thermostatische Mischventil 3 auch in ein klassisches Waschtischarmaturendesign integrierbar. Vorteilhaft für eine einfache Herstellung und/eine Produktpalette ist auch, dass die Absperrung nach dem thermostatischen Mischventil 3 durch ein übliches bzw. "Standard"-Absperrventil (z. B. Einhebelmischerkartusche oder Drucktastenventil) erfolgen kann. Insbesondere sind verschiedene Absperrventile adaptierbar unter Verwendung des gleichen thermostatischen Mischventils 3. Zudem kann (wie insbesondere in den Figuren 5 bis 7) eine Vielzahl an Bedienkonzepten für thermostatische Waschtischarmaturen ermöglicht werden. Zusätzliche Vorteile können insbesondere durch integrierte, großflächige Schmutzfangsiebe 25 erreicht werden, die robust gegen Verschmutzung sind.

Insbesondere bei Kombination mit einer Standard-Einhebelmischerkartusche kann der Schwenkbereich der Kartusche in vorteilhafter Weise für die Justierung der Mittelstellungstemperatur genutzt werden.

Somit werden hier eine Mischwasserarmatur 1 und ein thermostatisches Mischventil 3 angegeben, welche die im Zusammenhang mit dem Stand der Technik geschilderten Probleme zumindest teilweise lösen. Insbesondere werden eine Mischwasserarmatur 1 und ein thermostatisches Mischventil 3 angegeben, die ein optisch ansprechendes und/oder möglichst kompaktes Design, insbesondere für eine Waschtischarmatur ermöglichen. Darüber hinaus kann beispielsweise durch die Thermostatfunktion eine für den Benutzer vorteilhafte Bedienbarkeit erreicht werden. Weiterhin kann beispielsweise durch die Verwendbarkeit von Kartuschen eine möglichst einfache Herstellbarkeit, insbesondere im industriellen Maßstab und/oder ggf. auch einer Produktpalette (zum Beispiel durch verschiedene Kombinationen von unterschiedlichen Einstellkartuschen mit der thermostatischen Mischkartusche) ermöglicht werden.

### Bezugszeichenliste

- 1: Mischwasserarmatur
- 2: Armaturengehäuse
- 3: Mischventil
- 4: Einstellventil
- 5: Betätigungselement
- 6: Adapter
- 7: Stellelement
- 8: Gewindetrieb
- 9: Regelelement
- 10: Mischkammer
- 11: Überlastungsschutzelement
- 12: Regelschieber
- 13: Warmwasseranschlussschlauch
- 14: Kaltwasseranschlussschlauch
- 15: Schraubring
- 16: Arretierhülse
- 17: Stift
- 18: oberer Einsatz
- 19: unterer Einsatz
- 20: Geometrie
- 21: Auslass
- 22: Drucktaste
- 23: Kartuschengehäuse
- 24: Kaltwasserdichtsitz
- 25: Schmutzfangsieb
- 26: Hülse
- 27: Rückstellfeder
- 28: Schraubelement
- 29: Sicherungsring
- 30: Warmwasserspalt
- 31: Kaltwasserspalt
- 32: Auslauf

## Patentansprüche

1. Mischwasserarmatur (1) mit einem Armaturengehäuse (2), einem thermostatischen Mischventil (3) zur Regulierung der Mischwassertemperatur, einem Einstellventil (4) zur Einstellung eines Durchflusses durch die Mischwasserarmatur (1), und mindestens einem manuellen Betätigungselement (5, 22) zur wahlweisen, mechanischen Betätigung des Mischventils (3) und des Einstellventils (4), wobei das Mischventil (3) und das Einstellventil (4) derart in dem Armaturengehäuse (2) hintereinander angeordnet und fluidisch miteinander verbunden sind, dass durch die Mischwasserarmatur (1) strömendes Wasser das Mischventil (3) vor dem Einstellventil (4) durchströmt und wobei das Mischventil (3) und das Einstellventil (4) räumlich voneinander getrennt und relativ zueinander bewegbar sind, **dadurch gekennzeichnet, dass** das Mischventil (3) abströmseitig einen durchströmbaren Gewindetrieb (8) zur Temperaturvorgabe aufweist.

2. Mischwasserarmatur (1) nach Anspruch 1, wobei das Mischventil (3) und das Einstellventil (4) jeweils eine Mittelachse aufweisen, die koaxial zueinander ausgerichtet sind.

3. Mischwasserarmatur (1) nach Anspruch 1 oder 2, wobei das Einstellventil (4) zumindest teilweise in einem Adapter (6) angeordnet ist, der eine Bewegung des Betätigungselements (5) auf ein Stellelement (7) des Mischventils (3) übertragen kann.

4. Mischwasserarmatur (1) nach einem der vorhergehenden Ansprüche, wobei ein gemeinsames, manuelles Betätigungselement (5) zur wahlweisen, mechanischen Betätigung des Mischventils (3) und des Einstellventils (4) vorgesehen ist.

5. Mischwasserarmatur (1) nach einem der vorhergehenden Ansprüche, wobei der Gewindetrieb (8) unmittelbar auf ein Regelelement (9) des Mischventils (3) wirkt.

6. Mischwasserarmatur (1) nach einem der vorhergehenden Ansprüche, wobei der Gewindetrieb (8) zumindest teilweise eine Mischkammer (10) umgibt.

7. Mischwasserarmatur (1) nach einem der vorhergehenden Ansprüche, wobei das Mischventil (3) ein komprimierbares Überlastungsschutzelement (11) für ein Regelelement (9) des Mischventils (3) aufweist, wobei das Überlastungsschutzelement (11) zwischen einem Regelschieber (12) des Mischventils (3) und dem Regelelement (9) wirkt.

8. Mischwasserarmatur (1) nach einem der vorhergehenden Ansprüche, wobei das Mischventil (3) ein komprimierbares Überlastungsschutzelement (11) für ein Regelelement (9) des Mischventils (3) aufweist, wobei das Überlastungsschutzelement (11) zumindest teilweise in einem Regelschieber (12) des Mischventils (3) angeordnet ist.

9. Thermostatisches Mischventil (3) für eine Mischwasserarmatur (1) nach einem der vorhergehenden Ansprüche.

## Claims

1. A mixed water fitting (1) with a fitting housing (2), a thermostatic mixing valve (3) for controlling the mixed water temperature, an adjusting valve (4) for adjusting a flow rate through the mixed water fitting (1), and at least one manual actuating element (5, 22) for selective, mechanical actuation of the mixing valve (3) and the adjusting valve (4), wherein the mixing valve (3) and the adjusting valve (4) are arranged one behind the other in the fitting housing (2) and are fluidically connected to one another in such a manner that water flowing through the mixed water fitting (1) flows through the mixing valve (3) upstream of the adjusting valve (4), and wherein the mixing valve (3) and the adjusting valve (4) are spatially separated from one another and are movable relative to one another, **characterized in that** the mixing valve (3) has a threaded drive (8) on the outflow side through which a flow can pass for temperature presetting.

2. The mixed water fitting (1) according to claim 1, wherein the mixing valve (3) and the adjusting valve (4) each have a central axis which are aligned coaxially with one another.

3. The mixed water fitting (1) according to claim 1 or 2, wherein the adjusting valve (4) is at least partially arranged in an adapter (6) which can transmit a movement of the actuating element (5) to a setting element (7) of the mixing valve (3).

4. The mixed water fitting (1) according to any one of the preceding claims, wherein a common, manual actuating element (5) is provided for selective, mechanical actuation of the mixing valve (3) and the adjusting valve (4).

5. The mixed water fitting (1) according to any one of the preceding claims, wherein the threaded drive (8) acts directly on a control element (9) of the mixing valve (3) .

6. The mixed water fitting (1) according to any one of the preceding claims, wherein the threaded drive (8) at least partially surrounds a mixing chamber (10).

7. The mixed water fitting (1) according to any one of the preceding claims, wherein the mixing valve (3) comprises a compressible overload protection element (11) for a control element (9) of the mixing valve (3), wherein the overload protection element (11) acts between a control slide (12) of the mixing valve (3) and the control element (9).

8. The mixed water fitting (1) according to any one of the preceding claims, wherein the mixing valve (3) comprises a compressible overload protection element (11) for a control element (9) of the mixing valve (3), wherein the overload protection element (11) is arranged at least partially in a control slide (12) of the mixing valve (3).

9. A thermostatic mixing valve (3) for a mixed water fitting (1) according to any one of the preceding claims.

## Revendications

1. Robinetterie d'eau mitigée (1), pourvue d'un corps de robinet (2), d'un robinet mitigeur (3) thermostatique, destiné à réguler la température de l'eau mitigée, d'une soupape de réglage (4), destinée à régler un débit à travers la robinetterie d'eau mitigée (1), et d'au moins un élément d'actionnement (5, 22) manuel, destiné à actionner manuellement, de manière sélective le robinet mitigeur (3) et la soupape de réglage (4), le robinet mitigeur (3) et la soupape de réglage (4) étant placés l'un derrière l'autre dans le corps de robinet (2) et reliés fluidiquement l'un à l'autre de telle sorte que de l'eau circulant à travers la robinetterie d'eau mitigée (1) circule à travers le robinet mitigeur (3) à l'avant de la soupape de réglage (4) et le robinet mitigeur (3) et la soupape de réglage (4) étant physiquement séparés l'un de l'autre et déplaçables l'un par rapport à l'autre, **caractérisée en ce que** le robinet mitigeur (3) comporte côté aval un mécanisme fileté (8) susceptible d'être irrigué, pour la prescription de température.

2. Robinetterie d'eau mitigée (1) selon la revendication 1, le robinet mitigeur (3) et la soupape de réglage (4) comportant chacun un axe médian, qui sont orientés de manière coaxiale l'un par rapport à l'autre.

3. Robinetterie d'eau mitigée (1) selon la revendication 1 ou 2, la soupape de réglage (4) étant placée au moins partiellement dans un adaptateur (6) susceptible de transmettre un déplacement de l'élément d'actionnement (5) sur un élément de réglage (7) du robinet mitigeur (3).

4. Robinetterie d'eau mitigée (1) selon l'une quelconque des revendications précédentes, un élément d'actionnement (5) manuel commun étant prévu pour l'actionnement manuel sélectif du robinet mitigeur (3) et de la soupape de réglage (4).

5. Robinetterie d'eau mitigée (1) selon l'une quelconque des revendications précédentes, le mécanisme fileté (8) agissant directement sur un élément de réglage (9) du robinet mitigeur (3).

6. Robinetterie d'eau mitigée (1) selon l'une quelconque des revendications précédentes, le mécanisme fileté (8) entourant au moins partiellement une chambre de mélange (10).

7. Robinetterie d'eau mitigée (1) selon l'une quelconque des revendications précédentes, le robinet mitigeur (3) comportant un élément de protection contre les surcharges (11) compressible pour un élément de réglage (9) du robinet mitigeur (3), l'élément de protection contre les surcharges (11) agissant entre un registre de réglage (12) du robinet mitigeur (3) et l'élément de réglage (9).

8. Robinetterie d'eau mitigée (1) selon l'une quelconque des revendications précédentes, le robinet mitigeur (3) comportant un élément de protection contre les surcharges (11) compressible pour un élément de réglage (9) du robinet mitigeur (3), l'élément de protection contre les surcharges (11) étant placé au moins en partie dans un registre de réglage (12) du robinet mitigeur (3).

9. Robinet mitigeur (3) thermostatique pour une robinetterie d'eau mitigée (1) selon l'une quelconque des revendications précédentes.
